# EUROPÄISCHE PATENTANMELDUNG

(11) **EP 1 634 992 A1**
(43) Veröffentlichungstag der Anmeldung: **15.03.2006**
(21) Anmeldenummer: 04021765.5
(22) Anmeldetag: 14.09.2004
(51) Int. Cl.: D21C 5/02, D21H 25/02

(54) **Entfernung von extrahierbaren Inhaltsstoffen aus Papier**

(71) Anmelder: M-real Oyj, 02100 Espoo (FI)
(72) Erfinder: Uerlings, Viktor, 52351 Düren (DE)
(74) Vertreter: Sternagel, Fleischer, Godemeyer & Partner

(57) **Zusammenfassung**

Die Erfindung betrifft ein Verfahren zur Entfernung von extrahierbaren Inhaltsstoffen aus Papier, insbesondere die Entfernung von Inhaltsstoffen aus Mikrokapseln in zumindest teilweise Selbstdurchschreibepapier enthaltendem Altpapier, die Entleerung von Mikrokapseln und Abtrennung der Mikrokapselinhaltsstoffe aus Selbstdurchschreibepapier durch Behandlung der Papiere mit Lösungsmitteln, insbesondere durch Extraktion mit Hilfe eines geeigneten organischen Lösungsmittel(gemisches). Die Erfindung betrifft darüber hinaus die Verwendung dieses Verfahrens und die Verwendung von Lösungsmitteln zur Entfernung von extrahierbaren Inhaltsstoffen aus Papier bzw. zur Entleerung der Mikrokapselinhaltsstoffe und/oder Abtrennung der Mikrokapseln aus zumindest teilweise Selbstdurchschreibepapier enthaltendem Altpapier.

## Beschreibung

Die Erfindung betrifft ein Verfahren zur Entfernung von extrahierbaren Inhaltsstoffen aus Papier, insbesondere die Entfernung von Inhaltsstoffen aus Mikrokapseln in zumindest teilweise Selbstdurchschreibepapier enthaltendem Altpapier, die Entleerung von Mikrokapseln und Abtrennung der Mikrokapselinhaltsstoffe aus Selbstdurchschreibepapier durch Behandlung der Papiere mit Lösungsmitteln, insbesondere durch Extraktion mit Hilfe eines geeigneten organischen Lösungsmittel(gemisches). Die Erfindung betrifft darüber hinaus die Verwendung dieses Verfahrens und die Verwendung von Lösungsmitteln zur Entfernung von extrahierbaren Inhaltsstoffen aus Papier bzw. zur Entleerung der Mikrokapselinhaltsstoffe und/oder Abtrennung der Mikrokapseln aus zumindest teilweise Selbstdurchschreibepapier enthaltendem Altpapier.

Eine spezielle Sorte Papier sind die so genannten "Selbstdurchschreibepapiere". Diese Selbstdurchschreibepapiere enthalten Mikrokapseln, in denen unter anderem Farbstoffvorläufer (Farbbildner) und so genannte "Kapselöle" vorhanden sind. Die Kapselöle haben die Aufgabe, die innerhalb der Mikrokapseln vorhandenen Farbstoffvorläufer zu lösen und/oder zu dispergieren. Als Wandmaterial für diese Mikrokapseln werden u.a. Polyharnstoffe benutzt, die in einem Grenzflächen-Polyadditionsverfahren entstehen. Diese Kapseln werden dann auf die 0-berfläche von Papieren aufgebracht, wobei übliche Streichrezepturen angewendet werden.

Zusammen mit anderem Büropapier gelangen auch die Selbstdurchschreibepapiere in den Altpapierrecyclingkreislauf. Aus hygienischen und funktionellen Gründen ist es dabei wünschenswert, bei der Aufbereitung von Faserstoffen aus diesen Altpapieren einen möglichst hohen Austrag der in den Mikrokapseln enthaltenen Inhaltsstoffe, z.B. Kapselöle und Farbbildner, zu erzielen, um damit beispielsweise unerwünschte Verfärbungen der aufbereiteten Faserstoffe zu verhindern. Bei der Wiederaufbereitung von Selbstdurchschreibepapier werden nämlich die Mikrokapseln aufgrund der mechanischen Beanspruchung des Papiers beim Auflösevorgang zerstört und die Mikrokapselinhaltsstoffe freigesetzt.

Soll Altpapier, welches extrahierbare Inhaltsstoffe umfasst, wie z.B. Kapselinhaltsstoffe der Kapseln in Selbstdurchschreibepapier, wieder dem Rohstoffkreislauf zugeführt werden, sollten zumindest bestimmte extrahierbare Inhaltsstoffe entfernt werden, da sonst aufgrund von z.B. frei werdenden Kapselölen und/oder Farbbildnerstoffen Verschmutzungen bzw. Verfärbungen im wiederaufbereiteten Altpapier auftreten können. Letztlich können ohne eine Entfernung der Mikrokapseln und/oder der Mikrokapselinhaltsstoffe kapselhaltige Papiere einer Aufbereitung nicht zugeführt werden. Bisher erfolgt die Wiederaufbereitung von mikrokapselhaltigen Papieren üblicherweise in zwei Teilschritten. Im ersten Teilschritt der Wiederaufbereitung, dem so genannten "Aufschlagen", erfolgt eine Zerfaserung des mikrokapselhaltigen Papiers. Dieser Prozess wird üblicherweise in wässrigem Medium durch Zuführung mechanischer Energie, etwa durch Rühren, durchgeführt, wobei die im Papier befindlichen Mikrokapseln weitgehend zerstört werden und die darin befindlichen Inhaltsstoffe, also etwa Kapselöle und/oder Farbbildnerstoffe, freigesetzt werden. Im zweiten Schritt der Wiederaufbereitung wird die Papierstoffsuspension einer Wäsche und/oder Flotation unterworfen. Die Entfernung der Mikrokapselinhaltsstoffe im Wasch- bzw. Flotationsschritt kann dabei durch Zugabe spezieller Additive verbessert werden.

So beschreibt etwa die deutsche Offenlegungsschrift DE 197 00 253 A1 ein Verfahren zur Entfernung von Kapselölen aus Selbstdurchschreibepapier, wobei das Selbstdurchschreibepapier aus einer Papierstoffsuspension aufgeschlagen wird und diese Suspension anschließend einer Wäsche bzw. Flotation in Gegenwart eines nichtionischen Tensids unterzogen wird. Dabei soll ein Kapselölaustrag bei der Wiederaufbereitung von Selbstdurchschreibepapieren von mindestens 90% erzielt werden.

Wie Erfahrungen aus Labor- und Produktionsversuchen zeigen, ist an den genannten Verfahren des Standes der Technik nachteilig, dass eine quantitative Entfernung der Kapselöle bzw. Kapselinhaltsstoffe nicht möglich ist und dass ein relativ hoher Faserstoffverlust bei Anwendung dieser Verfahren zu verzeichnen ist. Darüber hinaus erwies sich als ebenfalls nachteilig, dass relativ hohe Mengen kapselölhaltiger nicht zerstörter Mikrokapseln im Faserstoffsystem nachweisbar bleiben, die dann im Pressensystem einer Papiermaschine zerstört werden und somit ins Siebwasserkreislaufsystem eingeschleppt werden können.

Aufgabe der vorliegenden Erfindung war es, ein Verfahren zur Entfernung von insbesondere organischen Verunreinigungen aus Altpapier, insbesondere zur Entfernung von in Mikrokapseln eingeschlossenen Mikrokapselinhaltsstoffen und/oder freien Mikrokapselinhaltsstoffen aus Selbstdurchschreibepapier, zur Verfügung zu stellen, welches die im Stand der Technik auftretenden relativ hohen Faserstoffverluste vermindert, wobei gegebenenfalls gleichzeitig eine mindestens ebenso hohe oder sogar verbesserte Entfernung der Mikrokapselinhaltsstoffe aus dem Papier erzielt werden kann. Darüber hinaus soll das Verfahren einerseits vereinfacht werden und andererseits sollen, z.B., die entfernten Mikrokapselinhaltsstoffe einer Trennung in ihre Einzelbestandteile zuführbar sein.

Überraschenderweise wurde nun gefunden, dass die genannte Aufgabe in ausgezeichneter Weise gelöst wird, wenn man das zu recycelnde Papier, insbesondere das zumindest teilweise Selbstdurchschreibepapier enthaltende Altpapier, mit einem geeigneten Lösungsmittel extrahiert, wobei eine Entleerung der Kapseln bzw. Austragung der Kapselinhaltsstoffe erfolgt. Gegebenenfalls kann auf die vorherige Zerstörung noch intakter Mikrokapseln, insbesondere durch Aufschlagen des Altpapiers zu einer Papierstoffsuspension, verzichtet werden.

Gegenstand der vorliegenden Erfindung ist daher ein Verfahren zur Entfernung von extrahierbaren Stoffen aus und von Papier, dadurch gekennzeichnet, dass das Papier mit einem Lösungsmittel(gemisch) so lange extrahiert wird, bis die extrahierbaren Stoffe in dem Papier einen festgelegten Wert nicht überschreiten.

Unter dem festgelegten Wert ist der Wert zu verstehen, der für die Aufarbeitung des Papiers gewünscht ist und als Zielvorgabe feststeht. Beispielsweise kann für die Aufarbeitung von zu recycelndem Selbstdurchschreibepapier gewünscht sein, dass die Inhaltsstoffe der Mikrokapseln so weit ausgetragen werden sollen, dass sie für die weitere Aufarbeitung des recycelten Papiers maximal in Mengen von 10% ihrer ursprünglichen Menge vorliegen. Demnach müssten 90% der Kapselinhaltsstoffe extrahiert werden. Die festgelegten Werte, die als Zielvorgabe vorliegen, können sich auch gezielt auf einzelne bestimmte Inhaltsstoffe beziehen. So kann beispielsweise die Zielvorgabe sein, dass wenigstens 80% der Kapselöle auszutragen sind, oder wenigstens 90% der Farbbildner. In diesem Fall wird der Extraktionsvorgang so lange durchgeführt, bis diese Zielvorgabe erreicht ist.

In einer besonderen Ausführungsform der Erfindung besteht das Altpapier zumindest teilweise aus Selbstdurchschreibepapier und die extrahierbaren Inhaltsstoffe bestehen zumindest teilweise aus in Mikrokapseln eingeschlossenen Mikrokapselinhaltsstoffen und/oder aus freien Mikrokapselinhaltsstoffen. Mikrokapselinhaltsstoffe können z.B. sein a) Löseöle wie etwa aliphatische oder cycloparaffinische Kohlenwasserstoffe (z.B. Exxsol D80), Diisopropylnaphthalin-Isomere (z.B. KMC-Öl K113), Xylol-Systeme oder Fettsäuremethylester, und/oder b) organische Farbbildner wie etwa Lewisbasen (z.B. Crystal-Violet-Lactone oder 6-Dimethylamino-3,3-bis(4-dimethylethylaminophenyl)phthalid), und optional c) weitere Inhaltsstoffe.

Aber auch mit Farbstoffen bzw. Tinte, z.B. aus Tintenstrahldruckern, bedrucktes oder beschriebenes und/oder mit einer gegebenenfalls farbigen Strichschicht versehenes Papier, wie auch mit Wachsen, Fetten, Ölen oder ähnlichen organischen Stoffen bearbeitetes Papier kann nach dem erfindungsgemäßen Verfahren aufgearbeitet werden.

Im Falle der Verarbeitung von Selbstdurchschreibepapier ist es bei Anwendung des erfindungsgemäßen Verfahrens unkritisch, ob die Mikrokapseln im Papier noch unversehrt, die Mikrokapselinhaltsstoffe also noch vollständig in Mikrokapseln eingeschlossen sind, oder ob die Kapseln bereits zerstört oder beschädigt sind und die Inhaltsstoffe oder ein Teil davon sich in freier Form im Papierkörper befinden.

Zu unterscheiden von den freien oder eingeschlossenen Mikrokapselinhaltsstoffen ist das Mikrokapselwandmaterial, das entweder in Form intakter Mikrokapseln vorliegt, die die Inhaltsstoffe umschließen, oder in Form entleerter Mikrokapseln bzw. Bruckstücken davon vorliegt. Die Mikrokapseln können beispielsweise hergestellt werden, indem eine hydrophobe Lösung/Gemisch, die den Farbstoffvorläufer, ein Kapselöl und ein bifunktionelles Isocyanat enthält, in Wasser emulgiert wird und dieser Emulsion dann ein gegenüber Isocyanaten reaktives Amin zugesetzt wird. An der Grenzfläche der emulgierten hydrophoben Tröpfchen findet dann eine Polyaddition statt, wodurch sich eine Polyharnstoffwand um die hydrophoben Tröpfchen, also eine Mikrokapsel, bildet. Eine Entfernung dieses Mikrokapselwandmaterials aus dem Altpapier ist zwar nicht unbedingt notwendig, da dieses nicht zu Verschmutzungen führt, kann jedoch je nach Wahl des Lösungsmittels und der Verfahrensbedingungen zumindest teilweise erfolgen.

In einer Ausführungsform der Erfindung kann der Anteil der in Mikrokapseln eingeschlossenen Mikrokapselinhaltsstoffe am Gesamtanteil der Mikrokapselinhaltsstoffe in dem Altpapier vor der Extraktionsbehandlung mindestens 10%, vorzugsweise mindestens 50%, weiter bevorzugt mindestens 70% und besonders bevorzugt mindestens 90% betragen. Bevorzugt werden gemäß der Erfindung die eingeschlossenen und/oder freien Mikrokapselinhaltsstoffe, insbesondere die Kapselöle und die Farbstoffe und/oder Farbstoffbildner aus den Kapseln und dem Papier durch die Extraktion zu wenigstens 80%, bevorzugt zu wenigstens 90%, weiter bevorzugt zu wenigstens 95% und insbesondere bevorzugt zu wenigstens 98% entfernt, so dass nach dem Extraktionsverfahren das Papier nur noch maximal 20%, bevorzugt maximal 10%, weiter bevorzugt maximal 5% und insbesondere bevorzugt maximal 2% der ursprünglichen Menge der Kapselinhaltsstoffe enthält.

Die bevorzugt von dem Papier entfernten oder aus dem Papier ausgetragenen Inhaltsstoffe sind Inhaltsstoffe aus Mikrokapseln in Selbstdurchschreibepapier, insbesondere die darin befindlichen Kapselöle und Farbstoffe bzw. Farbbildner, aber auch auf das Papier aufgebrachte Farbe und/oder organische Bestandteile wie Wachse, Fette und ähnliche Materialien.

Das erfindungsgemäße Verfahren ermöglicht es, dass in einer bevorzugten Ausführungsform die Mikrokapseln des Selbstdurchschreibepapiers vor der Extraktionsbehandlung nicht gezielt zerstört werden müssen, insbesondere das Selbstdurchschreibepapier vor der Extraktionsbehandlung nicht zu einer Papierstoffsuspension aufgeschlagen werden muss. Vorteilhaft an diesem Verfahren ist insbesondere, dass auf den nach dem Stand der Technik notwendigen ersten Verfahrensschritt, nämlich das Aufschlagen und/oder Zerfasern des zu recycelnden Selbstdurchschreibepapiers zu einer Suspension, verzichtet werden kann.

Auch wenn im erfindungsgemäßen Verfahren die Art des verwendeten Lösungsmittels an sich nicht kritisch ist, sofern es die aus dem Papier zu entfernenden Stoffe löst bzw. sofern es die Mikrokapselinhaltsstoffe oder Bestandteile davon, insbesondere Kapselöle und/oder Farbstoffvorläufer, zumindest teilweise aus den Mikrokapseln zu entfernen und zu lösen vermag, ist in einer bevorzugten Ausführungsform der Erfindung das extrahierende Lösungsmittel ein organisches Lösungsmittel. Erfindungsgemäß können auch Mischungen aus zwei oder mehreren Lösungsmitteln verwendet werden. In einer bevorzugten Ausführungsform sollte das/die Lösungsmittel die Mikrokapselinhaltsstoffe aus den Kapseln herauslösen oder extrahieren können, oder die Kapselwandmaterialien so angreifen können, dass die Kapseln sich öffnen und die Kapselinhaltsstoffe von dem Lösungsmittel aufgenommen werden, so dass diese aus dem Papier ausgetragen werden können.

Als Lösungsmittel kann grundsätzlich jedes substituierte oder unsubstituierte aliphatische oder aromatische Lösungsmittel(gemisch) mit geeignetem Lösevermögen gegenüber den jeweiligen zu lösenden Stoffen verwendet werden. Dies kann gegebenenfalls zum Beispiel ein Alkan, Cycloalkan, Alken, Aromat, Ester, Alkohol, Aldehyd, Keton, Alkylether, halogeniertes Alkan oder Mischungen davon sein. Neben dem Lösevermögen gegenüber den jeweiligen zu lösenden Stoffen bzw. Bestandteilen der Mikrokapselinhaltsstoffe können weitere Faktoren eine Rolle bei der Wahl des Lösungsmittels spielen. Zum Beispiel ist Dichlormethan aus Umweltschutzgründen nicht bevorzugt, auch wenn es von seinem Lösevermögen grundsätzlich geeignet ist. Bevorzugte Lösemittel sind Aceton, Essigsäureethylester, 2-Butanon, 1-Butanol oder Mischungen davon.

In einer Ausführungsform des erfindungsgemäßen Verfahrens kann die Extraktion beispielsweise mit Hilfe eines Soxhlet-Extraktors oder einer auf ähnliche Weise funktionierenden Extraktionsapparatur durchgeführt werden. Typischerweise wird dabei das Lösungsmittel in einem (unteren) Sammelbehälter verdampft, der Dampf einer Kühlvorrichtung zwecks Kondensation zugeführt, woraufhin das Kondensat auf das zu extrahierende Material, hier das Papier, tropft und anschließend über einen Rücklauf, bevorzugt periodisch durch Heberwirkung, in den Sammelbehälter zurückfließt. Dieser Zyklus kann beliebig oft durchlaufen werden, wobei sich immer mehr Extrakt im Sammelbehälter anreichert bis letztlich das zu extrahierende Material keine weiteren extrahierbaren Bestandteile mehr enthält.

In einer bevorzugten Ausführungsform des erfindungsgemäßen Verfahrens wird das zu extrahierende Papier, vorzugsweise das zumindest teilweise Selbstdurchschreibepapier enthaltende Altpapier, vor der Extraktionsbehandlung zerkleinert und gegebenenfalls verdichtet. In einer weiteren bevorzugten Ausführungsform wird das gegebenenfalls zerkleinerte und gegebenenfalls verdichtete Papier bzw. das zumindest teilweise Selbstdurchschreibepapier enthaltende Altpapier während der Extraktionsbehandlung bewegt, insbesondere mit Hilfe eines Rührwerks. Diese Maßnahmen, Zerkleinern, gegebenenfalls Verdichten und/oder Bewegen des Papiers, erleichtern und beschleunigen den Extraktionsvorgang.

Bei Anwendung des erfindungsgemäßen Verfahrens kann erreicht werden, dass die Inhaltsstoffe im Altpapier, gegebenenfalls vorzugsweise die eingeschlossenen und/oder freien Mikrokapselinhaltsstoffe, insbesondere Kapselöl(e) und/oder Farbbildner, durch die Extraktionsbehandlung zu mindestens 80%, vorzugsweise zu mindestens 90%, weiter bevorzugt zu mindestens 95% und besonders bevorzugt zu mindestens 98% entfernt werden.

In einer Ausführungsform des erfindungsgemäßen Verfahrens können nach der Extraktionsbehandlung die extrahierten Stoffe, insbesondere die Kapselinhaltsstoffe wie etwa Kapselöle und Farbbildner, aber auch andere verfärbende oder verschmutzende Papierinhaltsstoffe durch geeignete Trennverfahren, insbesondere durch Destillation, getrennt werden.

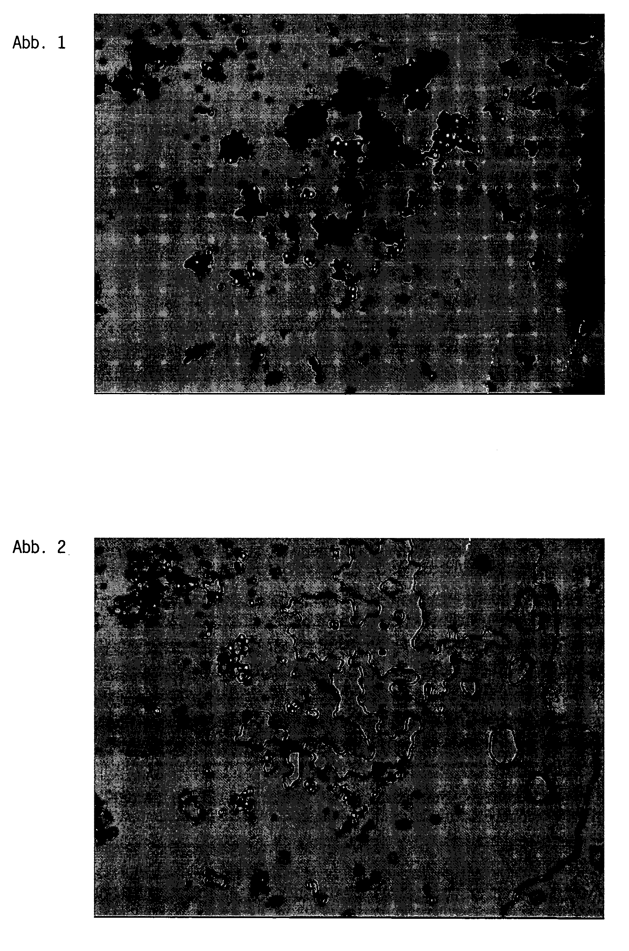

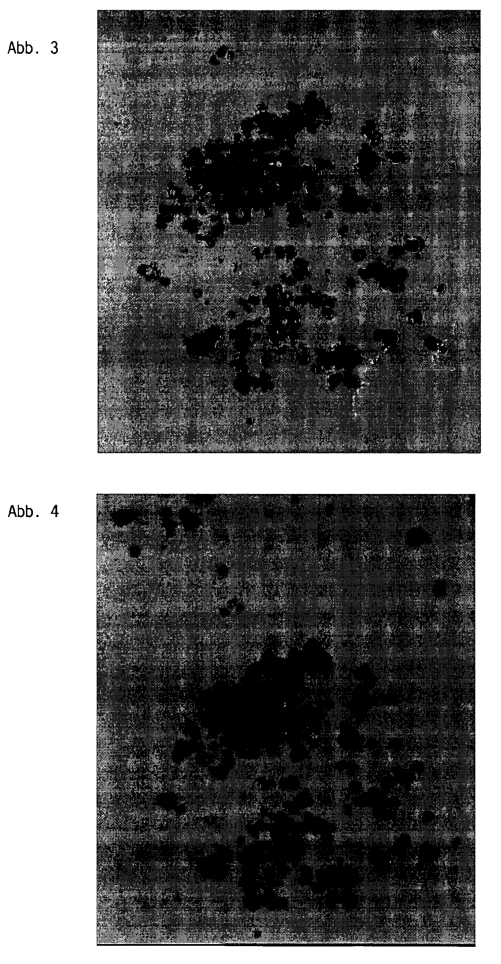

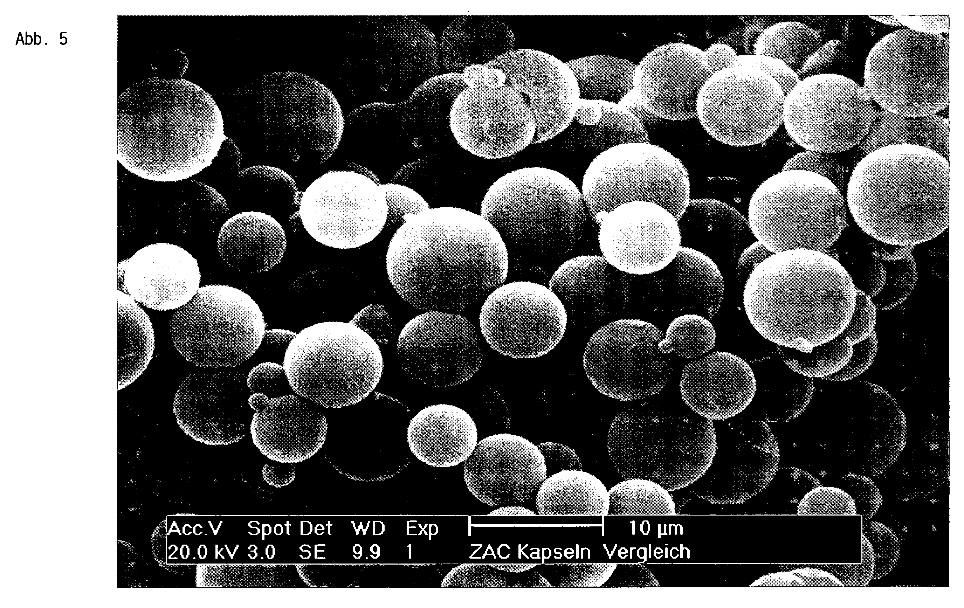

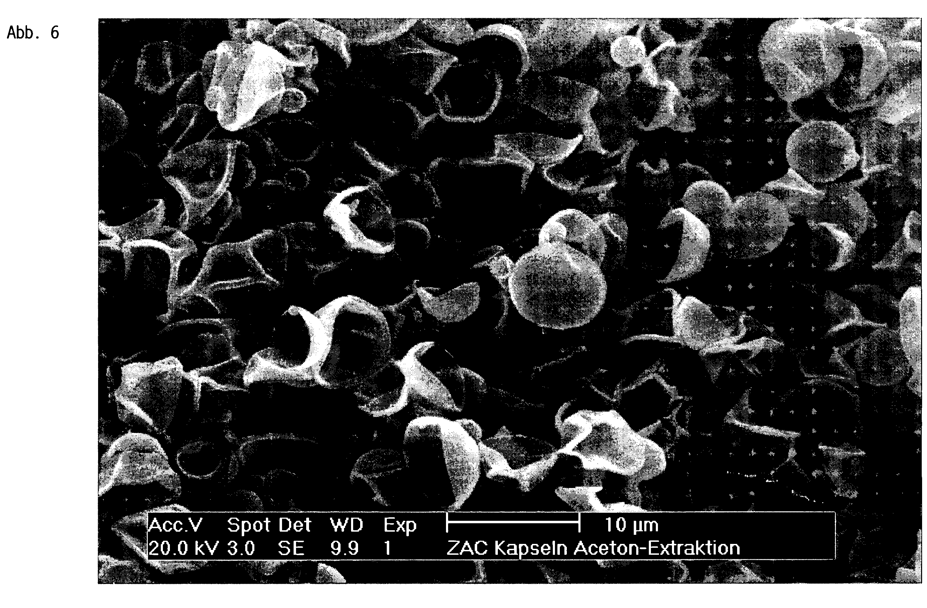

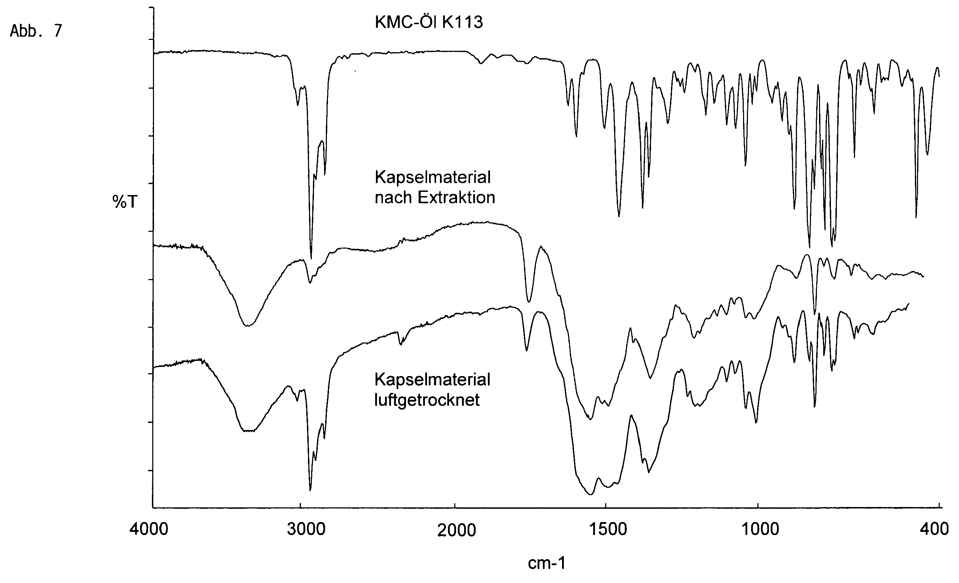

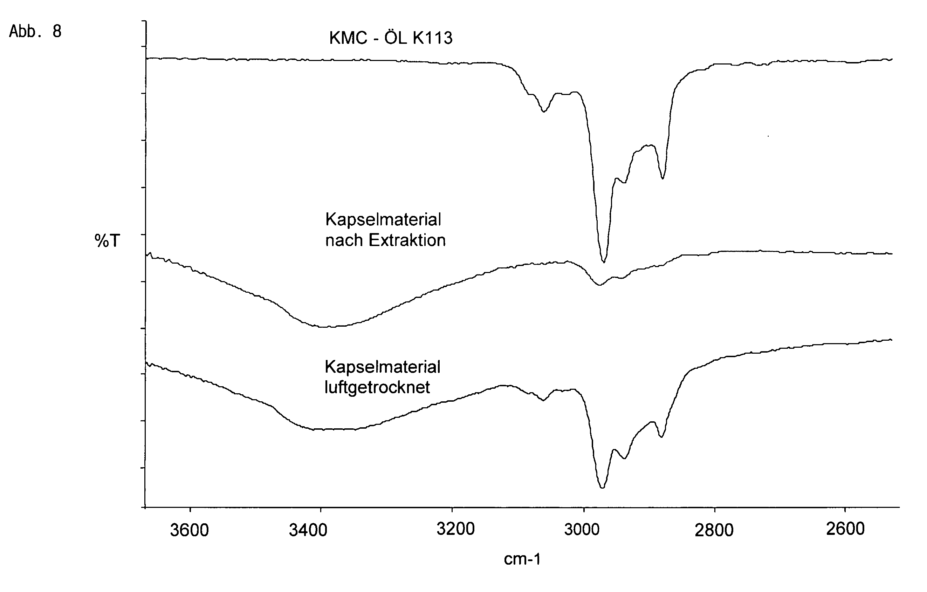

Die unerwartet hohe Wirksamkeit des erfindungsgemäßen Verfahrens wird auch belegt durch REM- (Abb. 5 und 6) und IR-Untersuchungen (Abb. 7 und 8) an Kapselmaterialien, die jeweils einmal nicht und einmal mit Lösungsmittel behandelt wurden. Dabei zeigen die IR-Analysen bzw. die REM-und lichtmikroskopischen (Abb. 1 bis 4) Untersuchungen, dass nach der Lösungsmittelextraktion bzw. -behandlung nur noch kleinste Restmengen der Inhaltsstoffen im recycelten Papier vorhanden sind.
Abbildung 1: Lichtmikroskopische Aufnahme von Mikrokapselmaterialien ohne Lösungsmittelbehandlung ohne Druckeinwirkung
Abbildung 2: Lichtmikroskopische Aufnahme von Mikrokapselmaterialien ohne Lösungsmittelbehandlung mit Druckeinwirkung
Abbildung 3: Lichtmikroskopische Aufnahme von Mikrokapselmaterialien nach Lösungsmittelextraktion ohne Druckeinwirkung
Abbildung 4: Lichtmikroskopische Aufnahme von Mikrokapselmaterialien nach Lösungsmittelextraktion mit Druckeinwirkung
Abbildung 5: REM-Aufnahme von Mikrokapselmaterialien ohne Lösungsmittelbehandlung
Abbildung 6: REM-Aufnahme von Mikrokapselmaterialien nach Lösungsmittelextraktion
Abbildung 7: IR-Spektralanalysen von Mikrokapselinhaltsstoffen
Abbildung 8: Ausschnitt aus Spektrum aus Abbildung 7

### Beispiele

### Beispiel 1: Extraktion eines mit Mikrokapseln beschichteten Selbstdurchschreibepapiers

30 g eines ca. 80 x 100 mm großen mit Mikrokapseln beschichteten CB-Selbstdurchschreibepapiers wurden in eine Extraktionshülse aus Filterpappe eingewogen und mittels Fest/Flüssig-Extraktion unter kontinuierlichem Rückfluss in einer Soxhlet-Laborapparatur sowie unter Verwendung von Aceton als Extraktionsmittel extrahiert. Hierbei wird das Lösungsmittel im Destillationskolben zum Sieden erhitzt, steigt als Dampf auf, wird am Kühler kondensiert, tropft in die Extraktionshülse, die das zu extrahierende Mikrokapselmaterial enthält und fließt periodisch durch Heberwirkung als Extrakt in den Destillationskolben zurück. Die extrahierten Stoffe reichern sich im Kolben an, während das Extraktionsmittel erneut verdampft, kondensiert und die extrahierende Substanz weiter auslaugt. Nach einer Extraktionszeit von 4 Stunden und ca. 35 Zyklen wurde das CB-Selbstdurchschreibepapier aus der Extraktionshülse entfernt, getrocknet und auf einem cf (coatet front)-Selbstdurchschreibepapier Beschriftungsversuche durchgeführt, wobei Druckeinwirkungen von >25 N/mm² zur Anwendung kamen. Die Beschriftungsversuche zeigten dabei, dass durch die Lösungsmittelextraktion keine Farbreaktion der Kapselinhaltsstoffe (wie z.B. das in Kapselölen gelöste Crystal-Violet-Lactone als Lewisbase) mit dem in der cf-Formulierung befindlichen Akzeptors (wie z.B. ein Zink-Salz eines Salicylsäurederivates als Lewissäure) zu beobachten war. Lichtmikroskopische Untersuchungen zeigten darüber hinaus, dass durch die Lösungsmittelextraktionen die Mikrokapselinhaltsstoffe vollständig entfernt wurden.

### Beispiel 2 : Extraktion von Mikrokapseln

25,63 g einer getrockneten Mikrokapselformulierung für die Beschichtung von Selbstdurchschreibepapier wurden in eine Extraktionshülse aus Filterpappe eingewogen, mit Watte abgeschlossen und mittels Fest/Flüssig-Extraktion unter kontinuierlichem Rückfluss in einer Soxhlet-Laborapparatur sowie unter Verwendung von Aceton als Extraktionsmittel extrahiert. Hierbei wird das Lösungsmittel im Destillationskolben zum Sieden erhitzt, steigt als Dampf auf, wird am Kühler kondensiert, tropft in die Extraktionshülse, die das zu extrahierende Mikrokapselmaterial enthält und fließt periodisch durch Heberwirkung als Extrakt in den Destillationskolben zurück. Die extrahierten Stoffe reichern sich im Kolben an, während das Extraktionsmittel erneut verdampft, kondensiert und die extrahierende Substanz weiter auslaugt. Nach einer Extraktionszeit von 3,5 Stunden und ca. 30 Zyklen wurde die Extraktionshülse nach entsprechender Trocknung zurück gewogen und der Extrakt durch Destillation vom Lösungsmittel getrennt. Die Restmenge an Mikrokapselmaterial betrug 4,15 g (16,2 % der Einwaage), die Extraktmenge der Mikrokapselinhaltsstoffe 21,4 g (83,5% der Einwaage).

IR-Analysen, REM- und lichtmikroskopische Untersuchungen zeigten, dass durch die Lösungsmittelextraktion die Mikrokapselinhaltsstoffe aus den Mikrokapseln vollständig entfernt wurden, ein qualitativer Nachweis der Kapselöle und Farbbildner war nicht mehr möglich.

## Patentansprüche

1. Verfahren zur Entfernung von extrahierbaren Stoffen aus und von Papier, **dadurch gekennzeichnet, dass** das Papier mit einem Lösungsmittel(gemisch) so lange extrahiert wird, bis die extrahierbaren Stoffe in dem Papier einen festgelegten Wert nicht überschreiten

2. Verfahren nach Anspruch 1, wobei die zu entfernenden extrahierbaren Stoffe Farbstoffe, Tinte, Wachse, Fette und/oder ähnliche Materialien sind.

3. Verfahren nach Anspruch 1 oder 2, wobei das Papier Altpapier ist und zumindest teilweise aus Selbstdurchschreibepapier besteht und die extrahierbaren Stoffe zumindest teilweise aus in Mikrokapseln eingeschlossenen Mikrokapselinhaltsstoffen und/oder aus freien Mikrokapselinhaltsstoffen bestehen.

4. Verfahren nach Anspruch 3, wobei die Mikrokapselinhaltsstoffe a) Löseöle, ausgewählt aus der Gruppe, die aliphatische oder cycloparaffinische Kohlenwasserstoffe, Diisopropylnaphthalin-Isomere, Xylol-Systeme und Fettsäuremethylester umfasst, und/oder b) organische Farbbildner, ausgewählt aus der Gruppe, die Crystal-Violet-Lactone und 6-Dimethylamino-3,3-bis(4-dimethylethylaminophenyl)phthalid und / oder sonstige Lewisbasen umfasst, und optional c) weitere Inhaltsstoffe umfassen.

5. Verfahren nach Anspruch 3 oder 4, wobei der Anteil der in Mikrokapseln eingeschlossenen Mikrokapselinhaltsstoffe am Gesamtanteil der Mikrokapselinhaltsstoffe in dem Altpapier vor der Extraktionsbehandlung mindestens 10%, vorzugsweise mindestens 50%, weiter bevorzugt mindestens 70% und besonders bevorzugt mindestens 90% beträgt.

6. Verfahren nach einem der Ansprüche 3 bis 5, wobei die Mikrokapseln vor der Extraktionsbehandlung nicht gezielt zerstört werden, insbesondere das Altpapier vor der Extraktionsbehandlung zu keiner Papierstoffsuspension aufgeschlagen wird.

7. Verfahren nach einem der vorhergehenden Ansprüche, wobei das oder mindestens eines der Lösungsmittel ein organisches Lösungsmittel ist.

8. Verfahren nach einem der vorhergehenden Ansprüche, wobei das extrahierende Lösungsmittel eine Mischung aus zwei oder mehreren Lösungsmitteln ist.

9. Verfahren nach einem der vorhergehenden Ansprüche, wobei ein Lösungsmittel aus der Gruppe ausgewählt wird, die umfasst: Alkane, Cycloalkane, Alkene, Aromaten, Ester, Alkohole, Aldehyde, Ketone, Alkylether, halogenierte Alkane oder Mischungen davon.

10. Verfahren nach Anspruch 9, wobei das oder mindestens eines der Lösungsmittel ausgewählt wird aus der Gruppe, die umfasst: Aceton, Dichlormethan, Essigsäureethylester, 2-Butanon, 1-Butanol oder Mischungen davon.

11. Verfahren nach einem der vorhergehenden Ansprüche, wobei die Extraktion mit Hilfe eines Soxhlet-Extraktors durchgeführt wird.

12. Verfahren nach einem der vorhergehenden Ansprüche, wobei das zu extrahierende Altpapier vor der Extraktionsbehandlung zerkleinert und gegebenenfalls wird.

13. Verfahren nach einem der vorhergehenden Ansprüche, wobei das zerkleinerte und gegebenenfalls verdichtete Altpapier während der Extraktionsbehandlung bewegt wird, insbesondere mit Hilfe eines Rührwerks.

14. Verfahren nach einem der vorhergehenden Ansprüche, wobei die extrahierbaren Inhaltsstoffe, vorzugsweise die eingeschlossenen und/oder freien Mikrokapselinhaltsstoffe, durch die Extraktionsbehandlung zu mindestens 80%, vorzugsweise zu mindestens 90%, weiter bevorzugt zu mindestens 95% und besonders bevorzugt zu mindestens 98% aus dem Papier entfernt werden.

15. Verfahren nach einem der vorhergehenden Ansprüche, wobei nach der Extraktionsbehandlung die extrahierten Stoffe, vorzugsweise die Mikrokapselinhaltsstoffe, getrennt werden, insbesondere durch Destillation.

16. Verwendung eines Verfahrens gemäß einem der Ansprüche 1 bis 15 zur Aufarbeitung von Altpapier.

17. Verwendung eines Lösungsmittels oder Lösungsmittelgemisches gemäß einem der Ansprüche 7 bis 10 zur Aufarbeitung von Altpapier.
